# DEMANDE DE BREVET EUROPEEN

(11) **EP 4 733 114 A1**
(43) Date de publication de la demande: **29.04.2026**
(21) Numéro de dépôt: 25202824.6
(22) Date de dépôt: 17.09.2025
(51) Int. Cl.: B60K 35/22

(54) **PROCÉDÉ DE VERROUILLAGE/DÉVERROUILLAGE DES PORTIÈRES D'UN VÉHICULE AUTOMOBILE**

(30) Priorité: 23.10.2024 FR 2411560
(71) Demandeur: Stellantis Auto SAS, 78300 Poissy (FR)
(72) Inventeur: POITEVIN, THOMAS, 91620 NOZAY (FR); BAYARD, LOIC, 91470 FORGES LES BAINS (FR)
(74) Mandataire: ESIP

(57) **Abrégé**

Un procédé mis en œuvre par un processeur de verrouillage/déverrouillage des portières d'un véhicule automobile comprend les étapes de :
• détection (201) d'un événement susceptible de nécessiter le verrouillage/déverrouillage des portières ;
• affichage (205) sur un écran tactile du cockpit du véhicule automobile d'un bouton actionnable ;
• détection (207) d'un appui sur le bouton actionnable ;
• enclenchement (211) de la fonction verrouillage/déverrouillage correspondante.

Un système de verrouillage/déverrouillage des portières d'un véhicule automobile et un véhicule automobile comprenant le système sont également décrits.

## Description

### Domaine technique

La présente invention se rapporte à un procédé de verrouillage/déverrouillage des portières d'un véhicule automobile, un produit-programme d'ordinateur, un système de verrouillage/déverrouillage des portières d'un véhicule automobile et un véhicule automobile comprenant un tel système.

### État de la technique

La fonction verrouillage/déverrouillage des portières est générique et est maintenant présente dans tous les véhicules.

Elle permet, à l'aide d'un bouton physique, à l'utilisateur de verrouiller ou déverrouiller son véhicule.

Quand le véhicule est verrouillé :
- De l'extérieur du véhicule, personne ne peut ouvrir les portières. Le conducteur et les passagers à l'intérieur du véhicule sont en sécurité.
- De l'intérieur du véhicule, le conducteur et le passager avant peuvent tout de même ouvrir les portières pour sortir du véhicule et cela déverrouille intégralement le véhicule. Pour les passagers à l'arrière du véhicule, cela dépendra de l'activation ou non de la sécurité enfant.

Par ailleurs, cette fonction peut avoir un mode automatique qui verrouille automatiquement les portières lorsque le véhicule est en mouvement.

Un inconvénient des modes de réalisation actuels de cette fonction est que le bouton physique se retrouve confondu parmi un ensemble d'autres boutons physiques du cockpit. Or, souvent cette fonction est utilisée en situation de stress ou d'une demande de rapidité d'exécution.

Parmi de telles situations, il est possible de citer le cas où, le véhicule étant verrouillé, une personne à l'extérieur, sous la pluie, cherche à rentrer pour se mettre à l'abri. Un autre exemple d'une telle situation est lorsque le véhicule se trouve entouré de personnes inconnues et pour lesquelles le conducteur souhaite les empêcher de pénétrer dans le véhicule.

Or, dans ces situations, le bouton est souvent trop petit et difficile à trouver, ce qui peut provoquer un sentiment d'insécurité ou une frustration.

Il existe donc un réel besoin d'un procédé et d'un système de verrouillage/déverrouillage des portières d'un véhicule automobile qui résolvent tout ou partie des inconvénients précités.

### Description de l'invention

Pour résoudre un ou plusieurs des inconvénients cités précédemment, selon un premier mode de réalisation, un procédé mis en œuvre par un processeur de verrouillage/déverrouillage des portières d'un véhicule automobile comprend les étapes de :
- détection d'un événement susceptible de nécessiter le verrouillage/déverrouillage des portières ;
- affichage sur un écran tactile du cockpit du véhicule automobile d'un bouton actionnable ;
- détection d'un appui sur le bouton actionnable ;
- enclenchement de la fonction verrouillage/déverrouillage correspondante.

Ainsi, l'utilisateur a accès à un bouton très visible pour actionner les portières du véhicule, même s'il est en situation de stress ou d'urgence.

Des caractéristiques ou des modes de réalisation particuliers, utilisables seuls ou en combinaison sont :
- le bouton actionnable a une surface supérieure à 25 % de la surface de l'écran tactile ;
- le procédé comprend en outre une étape préliminaire d'ajustement manuel de la surface du bouton actionnable ;
- la détection d'un événement comprend la détection d'une personne frappant sur le véhicule ;
- la détection d'une personne comprend la détection du bruit provoqué par la frappe du véhicule ; et/ou
- la détection de l'événement dépend de l'état initial de verrouillage/déverrouillage des portières.

Dans un deuxième mode de réalisation, un produit-programme d'ordinateur comprend des instructions de code de programme pour la mise en œuvre du procédé ci-dessus lorsque le produit-programme est exécuté sur un calculateur.

Dans un troisième mode de réalisation, un système de verrouillage/déverrouillage des portières d'un véhicule automobile comprend :
- au moins un capteur adapté pour détecter un événement susceptible de nécessiter le verrouillage/déverrouillage des portières ; connecté à
- un écran tactile d'interface personne-machine adapté pour afficher un bouton actionnable et détecter un appui sur celui-ci ; connecté à
- un actionneur adapté pour enclencher la fonction verrouillage/déverrouillage correspondante.

Dans un quatrième mode de réalisation, un véhicule automobile comprend un système selon le troisième mode de réalisation.

### Brève description des figures

L'invention sera mieux comprise à la lecture de la description qui suit, faite uniquement à titre d'exemple, et en référence aux figures en annexe dans lesquelles :
- [Fig 1] représente une vue de face d'une planche de bord d'un véhicule comprenant un système de verrouillage/déverrouillage des portières selon un mode de réalisation ; et
- [Fig 2] représente un ordinogramme d'un procédé de verrouillage/déverrouillage des portières selon un mode de réalisation.

### Modes de réalisation

Les modes de réalisation présentés ci-après font référence à un véhicule automobile, à une voiture. Cependant, l'homme du métier comprend que ceux-ci sont également utilisables avec d'autres types de véhicule, tels que les camionnettes, les vans, etc.

Les termes « avant », « arrière », « haut », « bas », « transverse » s'entendent par rapport au véhicule.

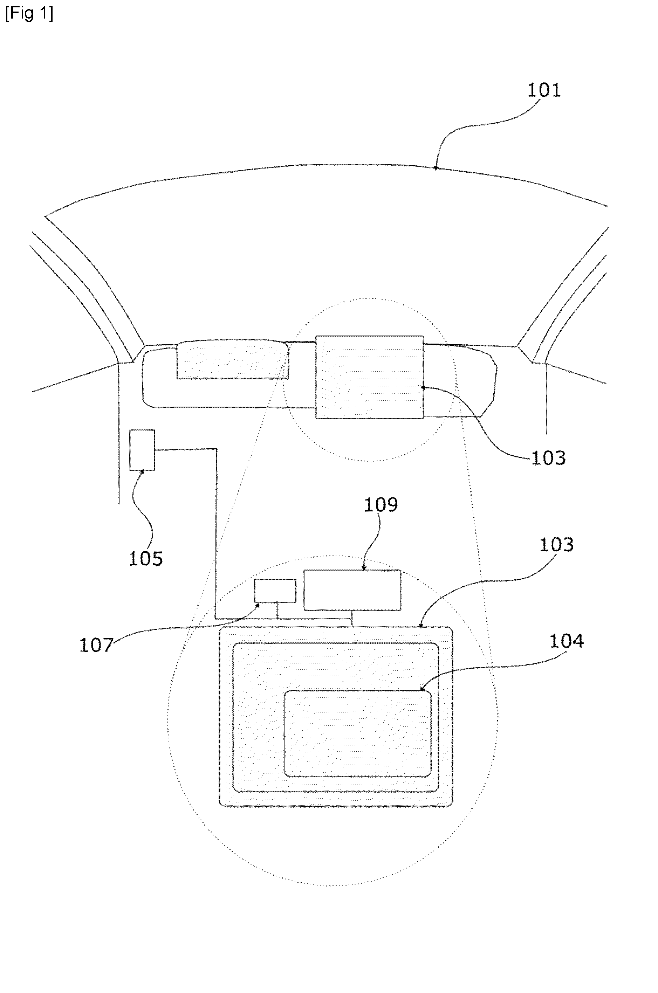

En référence à la Fig. 1, un véhicule automobile 101 comprend un système de verrouillage/déverrouillage des portières comprenant un écran tactile 103. Cet écran tactile 103 est par exemple un écran tactile se trouvant au milieu de la planche de bord pour être accessible du conducteur et du passager avant et qui regroupe les interfaces personne-machine d'un certain nombre de fonctions, comme les fonctions de confort (chauffage, climatisation, etc.), les fonctions de divertissement (gestion du système sonore, interface avec les téléphones portables, etc.) et de navigation. En particulier, l'écran tactile 103 peut afficher un bouton actionnable 104, c'est-à-dire un graphique représentant une zone de l'écran telle que, lorsque l'utilisateur touche la zone du bouton, une action est enclenchée.

Le système comprend également des actionneurs 105 au niveau des portières pour verrouiller ou déverrouiller les serrures de celles-ci.

Le système comprend en outre un ou des capteurs 107 adaptés pour détecter un événement susceptible de nécessiter le verrouillage/déverrouillage des portières.

Par événement susceptible de nécessiter le verrouillage/déverrouillage des portières, on entend un événement qui est perçu par le conducteur ou le passager avant comme nécessitant une telle action.

Une telle situation peut correspondre à une personne qui souhaite entrer dans le véhicule du côté passager et, pour cela va frapper sur la vitre de la portière correspondante. Le capteur 107 de détection de cette situation comprend par exemple un micro pour capter le son de la frappe, ou un capteur de vibration qui va capter la vibration de la vitre lorsqu'elle est frappée. Le capteur 107 comprend en outre une caméra extérieure pour détecter qu'une personne se trouve à proximité de la portière.

Une autre situation peut correspondre à ce qu'un nombre important de personnes entoure le véhicule. Le capteur 107 de détection de cette situation comprend alors les caméras de détection de l'environnement du véhicule qui sont également utilisées pour les aides à la conduite.

Une troisième situation peut correspondre à la détection que le véhicule est à l'arrêt depuis un certain temps, avec le conducteur à l'intérieur et avec les portières déverrouillées. Le véhicule pourrait proposer alors le verrouillage des portières.

Une quatrième situation peut correspondre à une tentative par les passagers situés à l'arrière d'ouvrir les portières alors que celles-ci sont verrouillées par la sécurité enfant. Le capteur 107 comprend alors la détection de la manipulation des poignées.

Ces quelques exemples de situation ne sont pas limitatifs et d'autres cas d'usage peuvent être développés.

À la lecture de ces exemples, on comprend qu'une situation est susceptible d'enclencher le procédé en fonction de l'état de verrouillage/déverrouillage des portières. Par exemple, dans la première situation, si les portières sont déverrouillées, la personne à l'extérieur n'a pas besoin de frapper pour rentrer dans le véhicule. À l'inverse, cela implique une prise en compte de la deuxième situation.

Les composants du système sont connectés entre eux et à un contrôleur 109 qui coordonne et pilote le système.

Le contrôleur 109 peut, par exemple, être intégré dans le système de contrôle du véhicule 101, comme un système avancé d'aide à la conduite, communément appelé ADAS (pour « Advanced driver-assistance systems » selon la terminologie anglaise), qui prend toutes les décisions de conduite en fonction de l'environnement et de la destination programmée. Le véhicule automobile est alors qualifié de véhicule automobile autonome. Mais il peut être également un système centralisé de gestion du véhicule comprenant, ou non, des aides à la conduite.

Le transfert de données entre les différents éléments est réalisé de préférence par un bus de données de type CAN (pour *« Controller Area Network »* en anglais, soit « réseau de zone de contrôleurs ») ou LIN (pour « Local Interconnect Network » en anglais, ou « Réseau interconnecté local » en français).

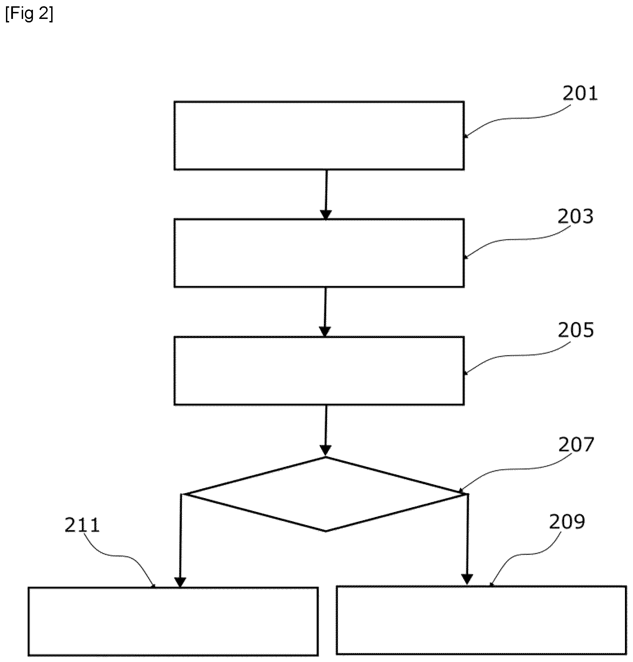

Le fonctionnement du système de verrouillage/déverrouillage est le suivant, Fig. 2.

À l'étape 201, un événement susceptible de nécessiter le verrouillage/déverrouillage des portières est détecté par le capteur 107, par exemple, un des événements listés ci-dessus.

Le contrôleur 109 décide alors, étape 203, de proposer à l'utilisateur un verrouillage/déverrouillage des portières.

Pour cela, il ordonne à l'écran tactile 103 d'afficher, étape 205, le bouton actionnable 104.

L'écran tactile se met, étape 207, en mode de détection d'un appui sur le bouton 104.

Si l'utilisateur n'appuie pas sur le bouton 104, alors, après une temporisation prédéterminée, le bouton actionnable 104 disparait, étape 209, et l'écran tactile affiche d'autres informations, par exemple, un menu de sélection de fonctions.

Si l'utilisateur appuie sur le bouton 104, alors le contrôleur 109 envoie, étape 211, un ordre de verrouillage/déverrouillage des portières à l'actionneur 105.

La Fig. 1 illustre un système selon certains modes de réalisation. Le découpage présenté a un but pédagogique pour mettre en avant les différentes fonctions. Cependant, on comprend que chaque bloc peut être implémenté en utilisant différents moyens ou leurs combinaisons, tels que des composants matériels, du logiciel, un ou plusieurs calculateurs et/ou des circuits électroniques. Chacun des composants peut inclure au moins un calculateur ou une unité de contrôle-commande. Au moins une mémoire peut être comprise dans chaque composant. La mémoire peut inclure des instructions de programme d'ordinateur ou du code logiciel.

Les calculateurs peuvent être réalisés par n'importe quel type de dispositif de traitement de données, tel qu'une unité centrale de calcul, un processeur de traitement de signal, un circuit intégré d'application spécifique, un réseau de portes programmable, etc. Les calculateurs peuvent être réalisés sous forme d'un unique contrôleur, ou d'une pluralité de contrôleurs ou de calculateurs.

Les différents modules sont connectés entre eux par des liaisons de données adaptées à l'environnement. Celles-ci peuvent être de type filaire ou sans-fil.

Pour le logiciel, l'implémentation peut comprendre des modules ou unités répartis sous forme de procédures, fonctions, etc. Les mémoires peuvent être n'importe quel type de circuit de stockage. Elles peuvent faire partie du circuit du processeur, ou en être séparées et connectées via des liaisons électriques de donnée. Cela peut être des mémoires de type non volatiles, des disques durs, des mémoires vives, des mémoires flash, etc.

Le produit-programme peut être téléchargeable depuis un réseau de communication et/ou enregistré sur un support lisible par ordinateur. Il peut être directement exécutable par un processeur ou être sous la forme d'un langage de haut niveau nécessitant une ou des opérations intermédiaires pour être exécutable.

Ainsi, les instructions de programme stockées dans la mémoire et traitées par les calculateurs peuvent être n'importe quel type de code de programme, par exemple, un programme compilé ou interprété écrit dans un langage de programmation adapté.

Les instructions de programme d'ordinateur stockées dans la mémoire sont telles que, quand elles sont exécutées par le calculateur, ce dernier réalise une ou plusieurs des étapes des procédés décrits ci-dessus.

L'invention a été illustrée et décrite en détail dans les dessins et la description précédente. Celle-ci doit être considérée comme illustrative et donner à titre d'exemple et non comme limitant l'invention a cette seule description. De nombreuses variantes de réalisation sont possibles.

Dans une première variante, la taille du bouton actionnable 104 est choisie pour que celui-ci soit bien visible de l'utilisateur. Pour cela, sa surface est de préférence supérieure à 25 % de la surface de l'écran tactile. Autrement dit, le bouton actionnable couvre au moins le quart de la surface de l'écran tactile.

Dans une deuxième variante, cette surface et le positionnement du bouton actionnable sont paramétrés par l'utilisateur dans une étape préliminaire, par exemple au début de l'utilisation du véhicule.

## Revendications

1. Procédé mis en œuvre par un processeur de verrouillage/déverrouillage des portières d'un véhicule automobile comprenant les étapes de :
• détection (201) d'un événement susceptible de nécessiter le verrouillage/déverrouillage des portières ;
• affichage (205) sur un écran tactile du cockpit du véhicule automobile d'un bouton actionnable ;
• détection (207) d'un appui sur le bouton actionnable ;
• enclenchement (211) de la fonction verrouillage/déverrouillage correspondante.

2. Procédé selon la revendication 1, dans lequel le bouton actionnable a une surface supérieure à 25 % de la surface de l'écran tactile.

3. Procédé selon la revendication 1 ou 2, comprenant en outre une étape préliminaire d'ajustement manuel de la surface du bouton actionnable.

4. Procédé selon la revendication 1, 2 ou 3, dans lequel la détection d'un événement comprend la détection d'une personne frappant sur le véhicule.

5. Procédé selon la revendication 4, dans lequel la détection d'une personne comprend la détection du bruit provoqué par la frappe du véhicule.

6. Procédé selon l'une quelconque des revendications précédentes, dans lequel la détection de l'événement dépend de l'état initial de verrouillage/déverrouillage des portières.

7. Produit-programme d'ordinateur **caractérisé en ce qu'**il comprend des instructions de code de programme pour la mise en œuvre du procédé selon l'une quelconque des revendications 1 à 6 lorsque le produit-programme est exécuté sur un calculateur.

8. Système de verrouillage/déverrouillage des portières d'un véhicule automobile comprenant :
• au moins un capteur (107) adapté pour détecter un événement susceptible de nécessiter le verrouillage/déverrouillage des portières ; connecté à
• un écran tactile (103) d'interface personne-machine adapté pour afficher un bouton actionnable (104) et détecter un appui sur celui-ci ; connecté à
• un actionneur (105) adapté pour enclencher la fonction verrouillage/déverrouillage correspondante.

9. Véhicule automobile comprenant un système selon la revendication 8.
